# EUROPÄISCHE PATENTSCHRIFT

(11) **EP 1 635 368 B1**
(45) Veröffentlichungstag und Bekanntmachung des Hinweises auf die Patenterteilung: **18.07.2012**
(21) Anmeldenummer: 05012008.8
(22) Anmeldetag: 03.06.2005
(51) Int. Cl.: H01H 21/02, H01H 19/18, H01H 9/02, H01H 21/04

(54) **Elektrische/elektronische Installationseinheit**
Electrical/electronic installation unit
Unité d'installation électrique/électronique

(30) Priorität: 09.09.2004 DE 102004043649
(43) Veröffentlichungstag der Anmeldung: 15.03.2006
(73) Patentinhaber: Albrecht Jung GmbH & Co. KG, 58579 Schalksmühle (DE)
(72) Erfinder: Gebhardt, Marc, 58579 Schalksmühle (DE); Kandt, Richard, 44803 Bochum (DE); Ullrich, Konrad, 58339 Breckerfeld (DE)

(56) Entgegenhaltungen:
- EP-A- 0 436 804
- EP-A- 0 899 763
- DE-A1- 10 011 160
- DE-U1- 20 205 380

## Beschreibung

Die vorliegende Erfindung geht von einer gemäß Oberbegriff des Hauptanspruches konzipierten elektrischen/elektronischen Installationseinheit aus.

Derartige elektrische/elektronische Installationseinheiten sind in der Regel dafür vorgesehen, eine Vielzahl von in Gebäuden installierten Aktoren (Jalousieantriebe, Beleuchtungseinrichtungen, Fühler, Wächter usw.) bedarfsgerecht zu beeinflussen. Zu diesem Zweck sind die unterschiedlichsten Installationseinrichtungen, wie Schalter, Taster, Dimmer usw. bekannt geworden.

Durch die DE 40 00 623 A1 ist eine dem Oberbegriff des Hauptanspruches entsprechende elektrische/elektronische Installationseinheit für die Gebäudesystemtechnik bekannt geworden. Bei dieser elektrischen/elektronischen Installationseinheit für die Gebäudesystemtechnik ist ein in einer Installationsdose unterzubringendes erstes Funktionsmodul und ein in einem Gehäuse untergebrachtes, unter Zwischenschaltung eines Abdeckrahmens auf der Wand anzuordnendes zweites Funktionsmodul vorgesehen. Das zweite Funktionsmodul ist dabei jedoch derart ausgebildet und angeordnet, dass zu seiner formschönen Ergänzung ein relativ dick ausgebildeter Abdeckrahmen notwendig ist.

Des Weiteren ist durch die DE 197 37 907 A1 eine elektrische/elektronische Installationseinheit bekannt geworden, bei der LEDs vorgesehen sind, über die eine kleinflächige bzw. punktförmige Anzeige und weitere LEDs vorgesehen sind, über die eine größerflächige Ausleuchtung von Beschriftungsfeldern vorgenommen wird. Bei einer derartigen Ausbildung sind jedoch sowohl für die kleinflächige bzw. punktförmige Anzeige, als auch für die größerflächige Ausleuchtung je nach Anzahl der zu realisierenden Anzeigen und je nach Anzahl der zu realisierenden größerflächigen Ausleuchtungsbereiche jeweils eine entsprechende Anzahl von Lichtleitern notwendig. Sind mehrere Anzeigen und mehrere größerflächige Ausleuchtungsbereiche vorgesehen, ergibt sich eine beachtliche Anzahl von Lichtleitern, welche produziert und montiert werden müssen. Die Produktion und Montage einer Vielzahl von Lichtleitern ist nicht nur umständlich, sondern auch entsprechend teuer.

Ausgehend von derart ausgebildeten elektrischen/elektronischen Installationseinheiten liegt der vorliegenden Erfindung die Aufgabe zugrunde, eine Installationseinheit zu schaffen, die auf kostengünstige Art und Weise lediglich einen einzigen ersten Lichtleiter benötigt, um eine Vielzahl von kleinflächigen bzw. punktförmigen Anzeigen bedarfsgerecht mit Licht versorgen zu können und die auf kostengünstige Art und Weise lediglich einen einzigen zweiten Lichtleiter aufweist, um mehrere größerflächige Ausleuchtungsbereiche bedarfsgerecht mit Licht versorgen zu können.

Erfindungsgemäß wird diese Aufgabe durch die im Hauptanspruch angegebenen Merkmale gelöst.

Bei einer solchen Ausbildung ist besonders vorteilhaft, dass auch die Verwendung von besonders dünn ausgebildeten, formschönen Abdeckrahmen auf besonders kostengünstige Art und Weise möglich ist.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:
- Fig. 1:: prinziphaft eine Explosionsdarstellung einer solchen elektrischen/elektronischen Installationseinheit;
- Fig. 2:: einen Zusammenbau einer solchen elektrischen/elektronischen Installationseinheit in Zuordnung zum Abdeckrahmen und der Installationsdose.

Wie aus den Figuren hervorgeht, besteht eine solche elektrische/elektronische Installationseinheit für die Gebäudesystemtechnik hauptsächlich aus einem in die Installationsdose D hineinragenden ersten Funktionsmodul 1 und einem unter Zwischenschaltung eines Abdeckrahmens A und eines Tragringes T auf der Wand anzuordnenden zweiten Funktionsmoduls M.

Wie des weiteren aus den Figuren hervorgeht, weist das zweite Funktionsmodul M ein Gehäuse 3 auf, welches einen am Abdeckrahmen A zur Anlage kommenden ersten Gehäusebereich 4 zur Aufnahme einer Leiterplatte 5 und einen zweiten Gehäusebereich 6 zur Anbringung des ersten Funktionsmoduls 1 mit seinem separaten Gehäuseteil 7 aufweist. Das erste Funktionsmodul 1 weist eine weitere Leiterplatte 8 auf, die funktionsbedingt mit entsprechenden Bauteilen bestückt ist. Der Oberfläche der elektrischen/elektronischen Installationseinheit zugewandt ist auf der Leiterplatte 5 des zweiten Funktionsmoduls M ein erster Lichtleiter 9 und ein zweiter Lichtleiter 10 haltend zugeordnet. Über eine am Gehäuse 3 festlegbare Halteplatte 11 wird die positionsgenaue Zuordnung des ersten Lichtleiters 9 und des zweiten Lichtleiters 10 realisiert. Dabei werden der erste Lichtleiter 9 und der zweite Lichtleiter 10 den auf der Leiterplatte 5 angeordneten LEDs 12, 13 und Mikroschaltern 14, 15 positionsgenau zugeordnet. Einseitig an die Halteplatte 11 angrenzend ist an das Gehäuse 3 eine, den zweiten Lichtleiter 10 umgebende transluzente Abdeckung 16 festlegbar, die mit zwei zur Durchleuchtung vorgesehenen Folien 17 bestückt werden kann. Dabei ist die obere der beiden Folien 17 als Beschriftungsfolie und die untere der beiden Folien 17 als eine, die Farbgestaltung der elektrischen/elektronischen Installationseinheit im unbeleuchteten Zustand wiedergebende Designfolie ausgebildet. Die beiden Folien 17 sind wiederum von einer in die Abdeckung 16 einschiebbaren transluzenten Schublade 18 aufgenommen. Vier Betätigungstasten 19 sind als Abschluss auf die Halteplatte 11 aufrastbar, damit eine komfortable Bedienung durch den Benutzer gewährleistet ist.

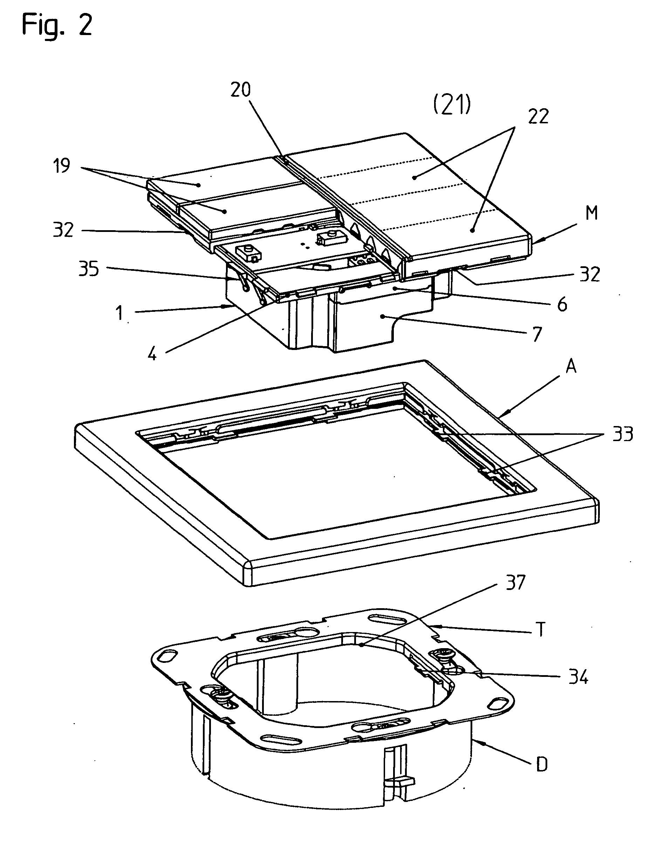

Wie insbesondere aus Figur 2 hervorgeht, bilden die vier Betätigungstasten 19 etwa die eine Hälfte der Oberfläche der elektrischen/elektronischen Installationseinheit. Einseitig schließt sich an die vier Betätigungstasten 19 der mittlere, ein schmales Band darstellende erste Bereich 20 an. Als schmales Band erstreckt sich der erste Bereich über die gesamte Länge der Oberfläche der elektrischen/elektronischen Installationseinheit und ist zur kleinflächigen bzw. punktförmigen Darstellung mehrerer Anzeigen vorgesehen. Innerhalb des ein schmales Band darstellenden ersten Bereichs 20 können jeweils den vier Betätigungstasten 19 zugeordnet zwei, je rechteckförmig ausgebildete Anzeigen zur Darstellung gebracht werden. Insgesamt sind somit über einen einzigen ersten Lichtleiter 9, den vier Betätigungstasten 19 zugeordnet, acht Anzeigen funktionsabhängig darstellbar. An den ersten Bereich 20 schließt sich wiederum einseitig ein größerflächiger Bereich 21 an. Dem zweiten Bereich 21 ist zur seiner gleichmäßigen Ausleuchtung der zweite Lichtleiter 10 zugeordnet. Der zweite Bereich 21 ist dabei in vier, jeweils einer der vier Betätigungstasten 19 zugeordnete größerflächige Ausleuchtungsbereiche 22 unterteilt, welche jeweils etwa der Größe einer Betätigungstaste 19 entsprechen. Durch diese Aufteilung der Oberfläche der elektrischen/elektronischen Installationseinheit ist es Vorteilhafterweise ohne weiteres möglich, je nach Bedarf auch eine spiegelbildliche Anordnung der vier Betätigungstasten 19 und des zweiten Bereiches 21 mit seinen vier Ausleuchtungsbereichen 22 vorzunehmen.

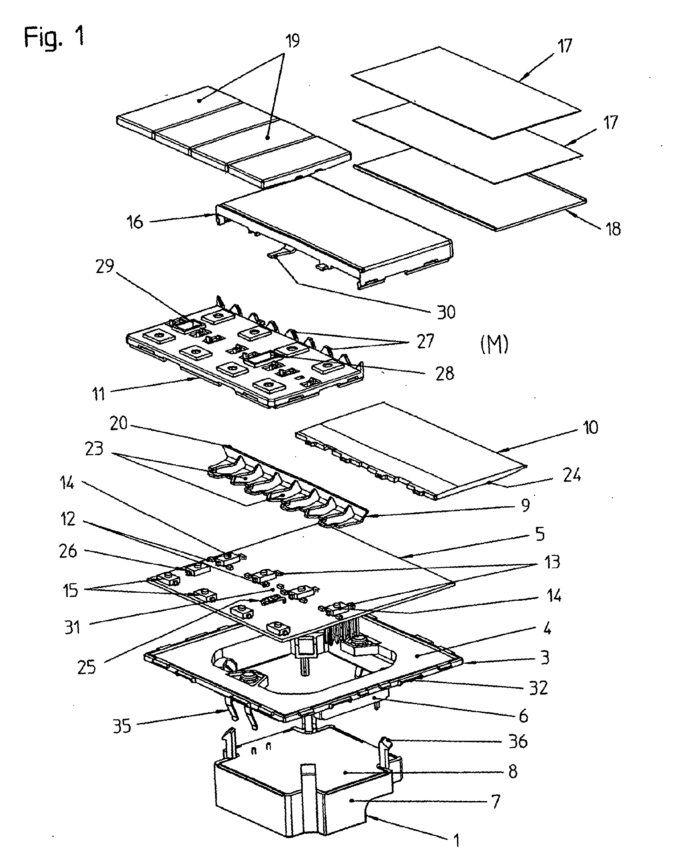

Wie insbesondere aus Figur 1 hervorgeht, sind dem ersten Lichtleiter 9 zur Darstellung von acht kleinflächigen bzw. punktförmigen Anzeigen acht in einer ersten Reihe auf der Leiterplatte 5 angeordnete LEDs 12 zugeordnet, die alle ihr Licht ausschließlich in den ersten Lichtleiter 9 abgeben. Um ein Überstrahlen von Licht von einer der acht Anzeigen in eine der anderen der acht Anzeigen des ersten Lichtleiters 9 zu verhindern, ist der erste Lichtleiter 9 einstückig mit acht fingerartigen Elementen 23 versehen. Eine, die acht fingerartigen Elemente 23 verbindende Strebe trägt erheblich zur Stabilität des ersten Lichtleiters 9 bei. Die acht fingerartigen Elementen 23 sind mit ihren Lichteinkoppelbereichen direkt den acht LEDs 12 zugeordnet. Andererseits ist ein, das schmale Band des ersten Bereichs 20 darstellender Lichtauskoppelbereich an den ersten Lichtleiter 9 angeformt. Des Weiteren sind dem zweiten Lichtleiter 10 zur größerflächigen Ausleuchtung des zweiten Bereiches 21 vier in einer zweiten Reihe auf der Leiterplatte 5 angeordnete LEDs 13 zugeordnet. Alle LEDs 13 der zweiten Reihe geben ihr Licht ausschließlich in den zweiten Lichtleiter 10 ab. Der zweite Lichtleiter 10 weist vier, den vier LEDs 13 direkt zugeordnete, nasenförmige Lichteinkoppelbereiche auf und ist an seiner gesamten Unterseite mit einer, das lichtreflektierende Mittel 24 darstellenden Farbbeschichtung versehen. Quasi das gesamte abgegebene Licht der vier in der zweiten Reihe angeordneten LEDs 13 wird somit zur homogenen Hinterleuchtung des zweiten Bereiches 21 mit seinen vier größerflächigen Ausleuchtungsbereichen 22 ausgenutzt. Vorteilhafterweise ist zur homogenen Ausleuchtung der vier größerflächigen Ausleuchtungsbereiche 24 nur ein einziger zweiter Lichtleiter 10 notwendig.

Wie des Weiteren insbesondere aus Figur 1 hervorgeht, ist sowohl die erste Reihe von LEDs 12, als auch die zweite Reihe von LEDs 13 dem mittleren Abschnitt der Leiterplatte 5 des zweiten Funktionsmoduls M zugeordnet. In einer ersten Reihe direkt den LEDs 12 und den LEDs 13 zugeordnet, ist eine erste Reihe von vier Mikroschaltern 14 auf der Leiterplatte 5 angeordnet. Links von dieser, dem linken Randbereich der Leiterplatte 5 zugeordnet ist außerdem eine zweite Reihe von vier Mikroschaltern 15 auf der Leiterplatte 5 vorhanden. Zur Temperaturerfassung ist zwischen einem Mikroschalter 14 der ersten Reihe und einem Mikroschalter 15 der zweiten Reihe ein Temperaturfühler 25 auf der Leiterplatte 5 vorhanden. Zudem ist dem oberen Randbereich der Leiterplatte 5 zugeordnet, ebenfalls zwischen einem Mikroschalter 14 der ersten Reihe und einem Mikroschalter 15 der zweiten Reihe ein Programmierschaltelement 26 auf der Leiterplatte 5 vorhanden. Der erste Lichtleiter 9 und der zweite Lichtleiter 10 stehen zu ihrer positionsgenauen Festlegung auf der Leiterplatte 5 mit einer Halteplatte 11 in Verbindung. Somit ist dauerhaft eine positionsgenau Zuordnung des ersten Lichtleiters 9 und des zweiten Lichtleiters 10 bezüglich der zugehörigen LEDs 12 bzw. LEDs 13 gewährleistet. Zur Verhinderung des Überstrahlens von Licht ist die Halteplatte 11 an ihrer dem zweiten Lichtleiter 10 zugeordneten Randbereich mit Abschottungsmitteln 27 versehen, die in ihrem oberen Bereich dreiecksförmig ausgebildet sind. Die Abschottungsmittel 27 greifen formschlüssig in entsprechende Lücken des ersten Lichtleiters 9 ein. Die Halteplatte 11 ist insgesamt so ausgebildet, dass sowohl die LEDs 12 bzw. LEDs 13, als auch die Mikroschalter 14 bzw. Mikroschalter 15 abgedeckt werden. Die Mikroschalter 14, 15 tauchen lediglich mit ihren Betätigungsstößeln durch die Halteplatte 11 hindurch und kommen mit diesen an der Unterseite der ihnen zugeordneten Betätigungstaste 19 zur Anlage. Der Temperaturfühler 25 ist einer ersten offenen Aufnahmekammer 28 und das Programmierschaltelement 26 einer zweiten offenen Aufnahmekammer 29 der Halteplatte 11 zugeordnet. Damit ist einerseits eine genaue Temperaturmessung der Raumtemperatur durch den Temperaturfühler 25 und andererseits der problemlose Zugang zum Programmierschaltelement 26 nur bei vorheriger Abnahme der darüber befindlichen Betätigungstaste 19 gewährleistet. Um eine sichere Halterung und Zuordnung der Halteplatte 11 und damit des ersten Lichtleiters 9 und des zweiten Lichtleiters 10 an der Leiterplatte 5 zu gewährleisten, ist die Halteplatte 11 über miteinander in Eingriff kommende Rastelemente fest mit dem Gehäuse 3 des zweiten Funktionsmoduls M verbunden. Außerdem ist zu diesem Zweck dem zweiten Lichtleiter 10 eine transluzente Abdeckung 16 zugeordnet, welche ebenfalls über Rastelemente mit dem Gehäuse 3 des zweiten Funktionsmoduls M fest in Verbindung steht. An die Abdeckung 16 ist zudem ein zungenförmiger Lichteinkoppelbereich 30 angeformt, welcher zur Lichteinkopplung einer zentral auf der Leiterplatte 5 angeordneten Statusleuchtdiode 31 vorgesehen ist. Das Licht der Statusleuchtdiode 31 wird punktförmig bzw. kleinflächig über ein Segment des als schmales Band ausgebildeten ersten Bereichs 20 funktionsgerecht ausgekoppelt.

Wie des Weiteren insbesondere aus Figur 1 hervorgeht, kann die Abdeckung 16 mit zwei transluzenten Folien 17 bestückt werden. Zu diesem Zweck ist eine Schublade 18 vorgesehen, welche die beiden-Folien 17 aufnimmt. Ausgehend von der, der zweiten Reihe von Mikroschaltern 15 gegenüberliegenden Schmalseite kann die Schublade 18 in eine entsprechende Aufnahme der Abdeckung 16 eingeschoben werden. Eine der beiden Folien 17 ist als Beschriftungsfolie ausgebildet und kann vom Anwender je nach Bedarf und Funktion mit einer entsprechenden Beschriftung versehen werden. Die andere der beiden Folien 17 ist als Designfolie dazu vorgesehen, im zweiten Bereich 21 die Farbgestaltung der elektrischen/elektronischen Installationseinheit im unbeleuchteten Zustand wiederzugeben. Zur Betätigung der elektrischen/elektronischen Installationseinheit sind vier Betätigungstasten 19 vorgesehen, welche beweglich auf die Halteplatte 11 aufgerastet werden können. Über jede der vier Betätigungstasten 19 können zwei Mikroschalter 14, 15 zur Realisierung der zugehörigen Funktion angesteuert werden.

Wie des Weiteren aus den Figuren hervorgeht, sind in das aus Kunststoff bestehende Gehäuse 3 des zweiten Funktionsmoduls M acht taschenartige Ausnehmungen 37 eingeformt, in die entsprechend nasenförmig, an die Innenseite des ebenfalls aus Kunststoff hergestellten Abdeckrahmens A angeformte Halteelemente 33 formschlüssig eingreifen. Die acht im Gehäuse 3 vorhandenen taschenartigen Ausnehmungen 32 weisen jeweils eine wesentlich größere Tiefe auf, als die acht an den Abdeckrahmen A angeformten, nasenförmigen Halteelemente 33 dick sind. Die Anordnung und Ausbildung der taschenartigen Ausnehmungen 32 in Abstimmung auf die Halteelemente 33 ist dabei so gewählt, dass das Gehäuse 3 des zweiten Funktionsmoduls M in Bezug auf die Oberseite des Abdeckrahmens A tiefer gesetzt von diesem aufgenommen ist.

Zur sicheren und komfortablen Installation der elektrischen/elektronischen Installationseinheit ist an der Installationsdose 1 ein aus Metall hergestellter Tragring T festlegbar, der an zwei gegenüberliegenden Bereichen angeformte in seine Durchtrittsöffnung hineinragende Befestigungsmittel 34 aufweist. Die beiden Befestigungsmittel 34 sind dabei im Wesentlichen schienenartig ausgebildet. An das Gehäuse 3 des zweiten Funktionsmoduls M ist an zwei gegenüberliegenden Seiten jeweils entsprechend ein aus Metall hergestelltes Befestigungselement 35 angebracht. Die mit den Befestigungsmitteln 34 des Tragrings T korrespondierenden Befestigungselemente 35 sind dabei jeweils in Form einer federnden Doppelzunge ausgeführt. Bezüglich ihrer Anordnung und Ausbildung sind die Befestigungsmittel 34 und die Befestigungselemente 35 derart aufeinander abgestimmt, dass ein lang erstreckter Kooperationsbereich realisiert ist, der eine sichere kraftschlüssige Verbindung entstehen lässt. Durch diesen lang erstreckten Kooperationsbereich ist auf einfache Art und Weise bei sicherer Installation ein wirkungsvoller Putz- bzw. Tapetenausgleich realisiert.

Wie insbesondere aus Figur 2 hervorgeht, ist das in die Installationsdose D hineinragende erste Funktionsmodul 1 mit einem, am Gehäuse 3 des zweiten Funktionsmoduls M festlegbaren separaten Gehäuseteil 7 umgeben. Zur Befestigung rasten an das separate Gehäuseteil 7 angeformte Rasthaken 36 in entsprechend ausgebildete, am Gehäuse 3 vorhandene Rastausnehmungen ein. Der Tragring T ist einstückig mit einem seine Durchtrittsöffnung umgebenden abstehenden Kragen 37 versehen. Die beiden Befestigungsmittel 34 sind sich gegenüberliegend an den freien Endbereich des Kragens 37 angeformt.

## Patentansprüche

1. Elektrische/elektronische Installationseinheit für die Gebäudesystemtechnik mit einem in die Installationsdose hineinragenden ersten Funktionsmodul und einem in einem Gehäuse untergebrachten, unter Zwischenschaltung eines Abdeckrahmens auf der Wand anzuordnenden zweiten Funktionsmodul **dadurch gekennzeichnet, dass** im mittleren Abschnitt der Leiterplatte (5) des zweiten Funktionsmoduls (M) in zumindest einer Reihe hintereinander liegend angeordnet mehrere LEDs (12, 13) aufgebracht sind, denen lediglich ein einziger erster Lichtleiter (9) zur kleinflächigen bzw. punktförmigen Darstellung des eingespeisten Lichts zugeordnet ist, der sich mit seinem Lichtauskoppelbereich als schmales Band in innerhalb eines mittleren ersten Bereichs (20) zumindest über den größten Teil der Oberfläche der elektrischen/elektronischen Installationseinheit erstreckt, und dass den LEDs (12, 13) unter Zwischenschaltung von Abschottungsmitteln (27) zur Verhinderung des Überstrahlens von Licht lediglich ein einziger zweiter Lichtleiter (10) zur flächigen Ausleuchtung zumindest eines sich einseitig direkt an den ersten Bereich (20) anschließenden, zweiten Bereichs (21) zugeordnet ist, der zumindest den größten Teil der angrenzenden Oberfläche der elektrischen/elektronischen Installationseinheit ausmacht.

2. Elektrische/elektronische Installationseinheit nach Anspruch 1, **dadurch gekennzeichnet, dass** der erste Bereich (20) mehrere kleinflächige Anzeigen und der Bereich (21) zumindest einen größerflächigen Ausleuchtungsbereich aufweist.

3. Elektrische/elektronische Installationseinheit nach Anspruch 1 oder 2,
**dadurch gekennzeichnet, dass** auf der Leiterplatte (5) des zweiten Funktionsmoduls (M) eine erste Reihe von LEDs (12) vorgesehen ist, von denen zumindest eine LED (12) ihr Licht in den ersten Lichtleiter (9) einkoppelt.

4. Elektrische/elektronische Installationseinheit nach einem der Ansprüche 1 bis 3, **dadurch gekennzeichnet, dass** auf der Leiterplatte (5) des zweiten Funktionsmoduls (M) eine zweite Reihe von LEDs (13) vorgesehen ist, von denen zumindest eine LED (13) ihr Licht in den zweiten Lichtleiter (10) einkoppelt.

5. Elektrische/elektronische Installationseinheit nach einem der Ansprüche 1 bis 4, **dadurch gekennzeichnet, dass** der erste Lichtleiter (9) zumindest ein fingerartig ausgebildetes Element (23) zur Lichtlenkung und Lichtabschottung aufweist.

6. Elektrische/elektronische Installationseinheit nach einem der Ansprüche 1 bis 5, **dadurch gekennzeichnet, dass** der zweite Lichtleiter (10) zumindest bereichsweise an seiner Unterseite mit einem lichtreflektierenden Mittel (24) versehen ist.

7. Elektrische/elektronische Installationseinheit nach Anspruch 6, **dadurch gekennzeichnet, dass** das lichtreflektierenden Mittel (24) zumindest teilweise als weiße Farbbeschichtung ausgebildet ist.

8. Elektrische/elektronische Installationseinheit nach einem der Ansprüche 1 bis 7, **dadurch gekennzeichnet, dass** der erste Lichtleiter (9) und der zweite Lichtleiter (10) zu ihrer Positionssicherung auf der Leiterplatte (5) mit einem am Gehäuse (3) des zweiten Funktionsmoduls (M) festlegbaren Halteplatte (11) in Verbindung stehen.

9. Elektrische/elektronische Installationseinheit nach einem der Ansprüche 1 bis 8, **dadurch gekennzeichnet, dass** zumindest ein erster Teil der Abschottungsmittel (27) an der Halteplatte (11) vorhanden sind.

10. Elektrische/elektronische Installationseinheit nach einem der Ansprüche 1 bis 9, **dadurch gekennzeichnet, dass** zumindest ein zweiter Teil der Abschottungsmittel (27) am ersten Lichtleiter (9) und/oder am zweiten Lichtleiter (10) vorhanden sind.

11. Elektrische/elektronische Installationseinheit nach einem der Ansprüche 1 bis 10, **dadurch gekennzeichnet, dass** der zweite Lichtleiter (10) von einer am Gehäuse (3) des zweiten Funktionsmoduls (M) festlegbaren transluzenten Abdeckung (16) umgeben ist, in die zumindest eine Folie (17) einlegbar ist.

12. Elektrische/elektronische Installationseinheit nach Anspruch 11, **dadurch gekennzeichnet, dass** zumindest eine Folie (17) von einer in die Abdeckung (16) einschiebbaren transluzenten Schublade (18) aufgenommen ist.

13. Elektrische/elektronische Installationseinheit nach einem der Ansprüche 1 bis 12, **dadurch gekennzeichnet, dass** auf der Leiterplatte (5) des zweiten Funktionsmoduls (M) mehrere, als Mikroschalter (14, 15) ausgebildete Schaltmittel vorhanden sind.

14. Elektrische/elektronische Installationseinheit nach Anspruch 13, **dadurch gekennzeichnet, dass** zumindest ein Mikroschalter (14, 15) zumindest einer LED (12, 13) direkt zugeordnet ist.

15. Elektrische/elektronische Installationseinheit nach einem der Ansprüche 1 bis 14, **dadurch gekennzeichnet, dass** auf der Leiterplatte (5) des zweiten Funktionsmoduls (M) zumindest ein Temperaturfühler (25) angeordnet ist.

16. Elektrische/elektronische Installationseinheit nach einem der Ansprüche 1 bis 15, **dadurch gekennzeichnet, dass** auf der Leiterplatte (5) des zweiten Funktionsmoduls (M) zumindest ein Programmierschaltelement (26) angeordnet ist.

17. Elektrische/elektronische Installationseinheit nach einem der Ansprüche 1 bis 16, **dadurch gekennzeichnet, dass** die Halteplatte (11) unter Freilassung des Betätigungsstößels zumindest einen auf der Leiterplatte (5) angeordneten Mikroschalter (14, 15) und zumindest eine auf der Leiterplatte (5) angeordnete LED (12, 13) abdeckt.

18. Elektrische/elektronische Installationseinheit nach einem der Ansprüche 1 bis 17, **dadurch gekennzeichnet, dass** die Seitenwandungen des Gehäuses (3) des zweiten Funktionsmoduls (M) Anschlussbereiche aufweisen, und dass der Abdeckrahmen (A) mit Anschlusszonen versehen ist, an denen die Anschlussbereiche des Gehäuses (3) zur Anlage kommen.

19. Elektrische/elektronische Installationseinheit nach einem der Ansprüche 1 bis 18, **dadurch gekennzeichnet, dass** zumindest ein an den Seitenwandungen des Gehäuses (3) des zweiten Funktionsmoduls (M) vorhandener Anschlussbereich als taschenartige Ausnehmungen (32), und dass zumindest eine am Abdeckrahmen (A) vorhandene Anschlusszone als formschlüssig in die taschenartige Ausnehmung (32) eingreifendes Halteelement (33) ausgebildet ist.

20. Elektrische/elektronische Installationseinheit nach Anspruch 19, **dadurch gekennzeichnet, dass** die Tiefe der im Gehäuse (3) vorhandenen taschenartigen Ausnehmungen (32) zumindest der Dicke der am Abdeckrahmen (A) vorhandenen Halteelemente (33) entspricht.

21. Elektrische/elektronische Installationseinheit nach einem der Ansprüche 1 bis 20, **dadurch gekennzeichnet, dass** das Gehäuse (3) des zweiten Funktionsmoduls (M) zumindest ein Befestigungselement (35) aufweist, welches direkt mit der Installationsdose (D) in Verbindung zu bringen ist.

22. Elektrische/elektronische Installationseinheit nach einem der Ansprüche 1 bis 21, **dadurch gekennzeichnet, dass** an der Installationsdose (D) ein Tragring (T) festlegbar ist, welcher zumindest ein angeformtes Befestigungsmittel (34) aufweist, und dass am Gehäuse (3) des zweiten Funktionsmoduls (M) zumindest ein Befestigungselement (35) vorhanden ist, das kraftschlüssig mit dem Befestigungsmittel (34) des Tragringes (T) in Verbindung kommt.

23. Elektrische/elektronische Installationseinheit nach einem der Ansprüche 1 bis 22, **dadurch gekennzeichnet, dass** das in die Installationsdose (D) hineinragende erste Funktionsmodul (1) mit einem, am Gehäuse (3) des zweiten Funktionsmoduls (M) festlegbaren separaten Gehäuseteil (7) umgeben ist.

24. Elektrische/elektronische Installationseinheit nach einem der Ansprüche 1 bis 23, **dadurch gekennzeichnet, dass** das erste Funktionsmodul (1) integral vom zweiten Funktionsmodul (M) umfasst ist.

## Claims

1. Electrical/electronic installation unit for building system engineering, having a first functional module projecting into the installation box and a second functional module which is accommodated in a housing and is to be attached to the wall with the interposition of a cover frame, **characterised in that**, in the middle section of the printed circuit board (5) of the second functional module (M), multiple LEDs (12, 13) are mounted which are arranged in at least one consecutive row and to which only a single first light guide (9) for presenting the infed light in a small-area or punctiform manner is assigned, extending with its light decoupling area as a small strip within a first middle section (20) over at least the main part of the surface of the electrical/electronic installation unit, and that only a single second light guide (10) is assigned to the LEDs (12, 13), interposing partitioning means (27) to prevent the irradiation of light, for the purpose of illuminating a more extensive area of at least one second section (21) which is directly adjacent of the first section (20) on one side and which constitutes at least the main part of the adjacent surface of the electrical/electronic installation unit.

2. Electrical/electronic installation unit according to Claim 1, **characterised in that** the first section (20) has multiple small-area displays and the section (21) has at least one more extensive illumination area.

3. Electrical/electronic installation unit according to Claim 1 or Claim 2, **characterised in that** a first row of LEDs (12) is provided on the printed circuit board (5) of the second functional module (M), at least one LED (12) of which injects its light into the first light guide (9).

4. Electrical/electronic installation unit according to any of Claims 1 to 3, **characterised in that** a second row of LEDs (13) is provided on the printed circuit board (5) of the second functional module (M) at least one LED (13) of which injects its light into the second light guide (10).

5. Electrical/electronic installation unit according to any of Claims 1 to 4, **characterised in that** the first light guide (9) has at least one member (23) of a finger-like design for directing and partitioning the light.

6. Electrical/electronic installation unit according to any of Claims 1 to 5, **characterised in that** the second light guide (10) is provided, at least section-wise on its underside, with a light-reflecting expedient (24).

7. Electrical/electronic installation unit according to Claim 6, **characterised in that** the light-reflecting expedient (24) is constructed, at least partially, as a white paint coating.

8. Electrical/electronic installation unit according to any of Claims 1 to 7, **characterised in that**, to secure their positions, the first light guide (9) and the second light guide (10) are connected to a retaining plate (11) that can be located on the housing (3) of the second functional module (M).

9. Electrical/electronic installation unit according to any of Claims 1 to 8, **characterised in that** at least a first component of the partitioning means (27) is provided on the retaining plate (11).

10. Electrical/electronic installation unit according to any of Claims 1 to 9, **characterised in that** at least a second component of the partitioning means (27) is provided on the first light guide (9) and/or on the second light guide (10).

11. Electrical/electronic installation unit according to any of Claims 1 to 10, **characterised in that** the second light guide (10) is enclosed by a translucent cover (16) which can be positioned on the second functional module (M) and into which at least one film (17) can be inserted.

12. Electrical/electronic installation unit according to Claim 11, **characterised in that** at least one film (17) is accommodated in a translucent drawer (18) that can be inserted into the cover (16).

13. Electrical/electronic installation unit according to any of Claims 1 to 12, **characterised in that** multiple switching devices designed as micro-switches (14, 15) are provided on the printed circuit board (5) of the second functional module (M).

14. Electrical/electronic installation unit according to Claim 13, **characterised in that** at least one micro-switch (14, 15) is directly assigned to at least one LED (12, 13).

15. Electrical/electronic installation unit according to any of Claims 1 to 14, **characterised in that** at least one temperature sensor (25) is located on the printed circuit board (5) of the second functional module (M).

16. Electrical/electronic installation unit according to any of Claims 1 to 15, **characterised in that** at least one programming circuit element (26) is located on the printed circuit board (5) of the second functional module (M).

17. Electrical/electronic installation unit according to any of Claims 1 to 16, **characterised in that**, without encroaching on the actuating plunger, the retaining plate (11) covers at least one micro-switch (14, 15) located on the printed circuit board (5) and at least one LED (12, 13) located on the printed circuit board (5).

18. Electrical/electronic installation unit according to any of Claims 1 to 17, **characterised in that** the side walls of the housing (3) of the second functional module (M) have connecting areas and that the cover frame (A) is provided with connecting zones to which the connecting areas of the housing (3) come to rest.

19. Electrical/electronic installation unit according to any of Claims 1 to 18, **characterised in that** at least one connecting area provided on the side walls of the housing (3) of the second functional module (M) is designed as pouch-like recesses (32) and that at least one connecting zone provided on the cover frame (A) is designed as a retention element (33) that engages in the pouch-like recess (32) in a form-fit manner.

20. Electrical/electronic installation unit according to Claim 19, **characterised in that** the depth of the pouch-like recesses (32) provided in the housing (3) corresponds at least to the thickness of the retention elements (33) provided on the cover frame (A).

21. Electrical/electronic installation unit according to any of Claims 1 to 20, **characterised in that** the housing (3) of the second functional module (M) has at least one fastening element (35) which is to be connected directly to the installation box (D).

22. Electrical/electronic installation unit according to any of Claims 1 to 21, **characterised in that** a supporting ring (T) can be positioned on the installation box (D) which has at least one integrally moulded fastening constituent (34) and that at least one fastening element (35) is provided on the housing (3) of the second functional module (M) which is connected to the fastening constituent (34) on the supporting ring (T) in a force-fit manner.

23. Electrical/electronic installation unit according to any of Claims 1 to 22, **characterised in that** the first functional module (1) projecting into the installation box (D) is enclosed by a separate housing member (7) that can be located on the housing (3) of the second functional module (M).

24. Electrical/electronic installation unit according to any of Claims 1 to 23, **characterised in that** the first functional module (1) is integrally enclosed by the second functional module (M).

## Revendications

1. Unité d'installation électrique / électronique pour le système domotique comprenant un premier module fonctionnel saillant dans la boîte d'installation et un deuxième module fonctionnel logé dans un carter et à disposer sur la paroi moyennant intercalation d'un cadre de recouvrement, **caractérisée en ce que** plusieurs LED (12, 13) sont appliqués dans la section médiane du circuit imprimé (5) du deuxième module fonctionnel (M), disposés les uns après les autres dans au moins une rangée, auxquels est associés uniquement un seul premier guide de lumière (9) en vue d'une présentation à petite surface voire sous forme de points de la lumière amenée qui s'étend avec sa zone de déclenchement de la lumière en tant que bande étroite dans une première zone médiane au moins sur la majeure partie de la surface de l'unité électrique / électronique et **en ce que** seulement un seul deuxième guide de lumière (10) destiné à l'éclairage en nappe au moins d'une deuxième zone (21) suivant unilatéralement directement à la première zone et qui représente au moins la majeure partie de la surface adjacente de l'unité électrique / électronique est associé aux LED (12, 13) moyennant intercalation de moyens d'isolation (27) en vue d'empêcher l'hyperluminosité de la lumière.

2. Unité d'installation électrique / électronique selon la revendication 1, **caractérisée en ce que** la première zone (20) présente plusieurs écran à petites surfaces et **en ce que** la zone (21) présente au moins une zone d'éclairage à plus grande surface.

3. Unité d'installation électrique / électronique selon l'une quelconque des revendications 1 ou 2, **caractérisée en ce qu'**une première rangée de LED (12) est prévue sur le circuit imprimé (5) du deuxième module fonctionnel (M), dont au moins un LED (12) enclenche sa lumière dans le premier guide de lumière (9).

4. Unité d'installation électrique / électronique selon l'une quelconque des revendications 1 à 3, **caractérisée en ce qu'**une deuxième rangée de LED (13) est prévue sur le circuit imprimé (5) du deuxième module fonctionnel (M) et dont au moins un LED (13) enclenche sa lumière dans le deuxième guide de lumière (10).

5. Unité d'installation électrique / électronique selon l'une quelconque des revendications 1 à 4, **caractérisée en ce que** le premier guide de lumière (9) présente au moins un élément (23) en doigt destiné au guidage et à l'isolation de la lumière.

6. Unité d'installation électrique / électronique selon l'une quelconque des revendications 1 à 5, **caractérisée en ce que** le deuxième guide de lumière (10) est, au moins sur certaines parties de sa face inférieure, muni d'un moyen (24) réfléchissant la lumière.

7. Unité d'installation électrique / électronique selon la revendication 6, **caractérisée en ce que** le moyen (24) réfléchissant la lumière est constitué au moins partiellement en tant que revêtement coloré en blanc.

8. Unité d'installation électrique / électronique selon l'une quelconque des revendications 1 à 7, **caractérisée en ce que** le premier guide de lumière (9) et le deuxième guide de lumière (10) sont en contact avec une plaque de maintien (11) apte à être fixée au carter (3) du deuxième module fonctionnel (M) afin d'assurer leur position sur le circuit imprimé (5).

9. Unité d'installation électrique / électronique selon l'une quelconque des revendications 1 à 8, **caractérisée en ce qu'**au moins un première partie des moyens d'isolation (27) est présente sur la plaque de maintien (11).

10. Unité d'installation électrique / électronique selon l'une quelconque des revendications 1 à 9, **caractérisée en ce qu'**au moins une deuxième partie des moyens d'isolation (27) est présente au premier guide de lumière (9) et / ou au deuxième guide de lumière (10).

11. Unité d'installation électrique / électronique selon l'une quelconque des revendications 1 à 10, **caractérisé en ce que** le deuxième guide de lumière (10) est contenu dans un cache (16) translucide apte à être fixé au carter (3) du deuxième module fonctionnel (M) et dans lequel au moins un film (17) est insérable.

12. Unité d'installation électrique / électronique selon la revendication 11, **caractérisée en ce qu'**au moins un film (17) est reçu par un tiroir (18) translucide insérable dans le cache (16).

13. Unité d'installation électrique / électronique selon l'une quelconque des revendications 1 à 12, **caractérisé en ce que** plusieurs moyens d'interruption constitués en tant que micro-interrupteurs (14, 15) sont présents sur le circuit imprimé (5) du deuxième module fonctionnel (M).

14. Unité d'installation électrique / électronique selon la revendication 13, **caractérisée en ce qu'**au moins un micro-interrupteur (14, 15) est directement associé à au moins un LED (12, 13).

15. Unité d'installation électrique / électronique selon l'une quelconque des revendications 1 à 14, **caractérisée en ce qu'**au moins un capteur de température (25) est disposé sur le circuit imprimé (5) du deuxième module fonctionnel (M).

16. Unité d'installation électrique / électronique selon l'une quelconque des revendications 1 à 15, **caractérisée en qu'**au moins un élément d'interrupteur de programmation (26) est disposé sur le circuit imprimé (5) du deuxième module fonctionnel (M).

17. Unité d'installation électrique / électronique selon l'une quelconque des revendications 1 à 16, **caractérisée en ce que** la plaque de maintien (11), sans couvrir le poussoir d'actionnement, recouvre au moins un micro-interrupteur (14, 15) disposé sur le circuit imprimé (5) et au moins un LED (12, 13) disposé sur le circuit imprimé (5).

18. Unité d'installation électrique / électronique selon l'une quelconque des revendications 1 à 17, **caractérisée en ce que** les parois latérales du carter (3) du deuxième module fonctionnel (M) comprennent des sections de connexion et **en ce que** le cadre de recouvrement (A) est muni de zones de connexion sur lesquelles les sections de connexion du carter (3) viennent en appui.

19. Unité d'installation électrique / électronique selon l'une quelconque des revendications 1 à 18, **caractérisée en ce qu'**au moins une section de connexion présente sur les parois latérales du carter (3) du deuxième module fonctionnel (M) est constituée en tant qu'évidements en poches (32) et qu'au moins une zone de connexion présente sur le cadre de recouvrement (A) est constituée en tant qu'élément de maintien (33) s'engageant à engagement positif dans l'évidement (32) en poche,

20. Unité d'installation électrique / électronique selon la revendication 19, **caractérisée en ce que** la profondeur des évidements (32) en poches présents dans le carter (3) correspond au moins à l'épaisseur des éléments de maintien (33) présents sur le cadre de recouvrement (A).

21. Unité d'installation électrique / électronique selon l'une quelconque des revendications 1 à 20, **caractérisée en ce que** le carter (3) du deuxième module fonctionnel (M) présente au moins un élément de fixation (35) devant être amené en contact direct avec la boîte d'installation (D).

22. Unité d'installation électrique / électronique selon l'une quelconque des revendications 1 à 21, **caractérisée en ce qu'**un anneau porteur (T) présentant au moins un moyen de fixation (34) d'un seul tenant est apte à être fixé sur la boîte d'installation (D) et **en ce qu'**au moins un élément de fixation (35) venant en contact par adhésion avec le moyen de fixation (34) de l'anneau porteur (T) est présent sur le carter (3) du deuxième module fonctionnel (M).

23. Unité d'installation électrique / électronique selon l'une quelconque des revendications 1 à 22, **caractérisée en ce que** le premier module fonctionnel (1) saillant dans la boîte d'installation (D) est contenu dans une partie séparée (7) du carter apte à être fixé sur le carter (3) du deuxième module fonctionnel (M).

24. Unité d'installation électrique / électronique selon l'une quelconque des revendications 1 à 23, **caractérisée en ce que** le premier module fonctionnel (1) est intégralement contenu dans le deuxième module fonctionnel (M).
